# DEMANDE DE BREVET EUROPEEN

(11) **EP 4 349 638 A1**
(43) Date de publication de la demande: **10.04.2024**
(21) Numéro de dépôt: 23201640.2
(22) Date de dépôt: 04.10.2023
(51) Int. Cl.: B60L 53/14, B60L 53/67, B60L 53/30, B60L 53/16, B60L 53/18, B60L 53/63, B60L 53/66

(54) **DISPOSITIF DE MULTIPLICATION DE POINTS DE CHARGE À PARTIR D'UNE BORNE DE RECHARGE DE VÉHICULES ÉLECTRIQUES**

(30) Priorité: 04.10.2022 FR 2210153
(71) Demandeur: J.D.B. Groupe, 17240 Saint-Genis-de-Saintonge (FR)
(72) Inventeur: MARTIN, Jean- Christophe, 17500 JONZAC (FR); BEAULIEU, Didier, 31500 TOULOUSE (FR)
(74) Mandataire: Brevalex

(57) **Abrégé**

Dispositif de multiplication de points de charge (10) destiné à être raccordé à une quelconque borne de recharge (20) pour véhicules électriques, notamment une borne murale, ledit dispositif comprenant une pluralité de points de charge (15) pour recharger les véhicules électriques (VE) qui y sont branchés à partir de ladite borne, un module de commande (11) pour gérer de manière mutualisée la recharge aux différents points de charge, et un module de puissance (12) alimentant séquentiellement ou simultanément lesdits points de charge, ledit dispositif étant alimenté électriquement par la borne de recharge (20) à laquelle il est raccordé, le module de commande (11) comprenant un circuit de simulation de véhicule électrique au niveau de la borne de recharge pour maintenir une disponibilité immédiate de l'alimentation électrique.

## Description

### DOMAINE TECHNIQUE

La présente invention appartient au domaine des systèmes de recharge pour véhicules électriques (VE) en courant alternatif (AC) monophasé ou triphasé, notamment les systèmes de recharge partagée, et concerne plus particulièrement un dispositif de multiplication de points de charge destiné à être relié à une borne de recharge existante pour recharger séquentiellement ou simultanément plusieurs véhicules électriques.

La présente invention concerne également un système de recharge mutualisée comprenant un tel dispositif.

### ÉTAT DE L'ART

Les véhicules électriques (VE), y compris les véhicules hybrides rechargeables (VHR), occupent une place de plus en plus importante dans la mobilité actuelle en raison de leur faible impact écologique comparés aux véhicules traditionnels à combustibles fossiles et, surtout, d'une volonté des pouvoirs publics de changer de paradigme énergétique face à des ressources fossiles épuisables.

Compte tenu du volume de son marché cible, la voiture électrique est incontestablement le fer de lance de cette évolution. Malgré de grandes avancées techniques, l'autonomie des voitures électriques reste relativement faible et peine à convaincre largement les automobilistes. En outre, le prix de ces véhicules et les contraintes liées à la recharge de leurs batteries n'en demeurent pas moins problématiques.

Néanmoins, les prévisions économiques restent en faveur d'une généralisation progressive et rapide des véhicules électriques dans les années à venir. Cela s'accompagnera nécessairement d'un besoin grandissant en solutions de recharge efficaces et adaptées à la recharge de plusieurs véhicules en même temps.

En effet, les bornes de recharge actuelles sont généralement conçues pour recharger un seul véhicule électrique à la fois, de sorte que la recharge de plusieurs véhicules en même temps nécessite l'installation d'autant de bornes individuelles. Or, pour un particulier en maison individuelle disposant de plusieurs véhicules électriques, l'installation de plusieurs bornes présente de nombreuses barrières, notamment de coût, d'encombrement et souvent de puissance de raccordement au réseau insuffisante.

De plus, au vu des durées de charge relativement courtes en moyenne, surtout pour les charges dites accélérées, les bornes de recharge restent longtemps inutilisées. Il serait donc particulièrement avantageux de pouvoir partager la charge d'une seule borne entre plusieurs véhicules tout en conservant une puissance équivalente à un seul point de charge, soit pour un courant maximum de 32A une puissance monophasée de 7,4kW ou de 22kW en triphasé. D'autant plus que le besoin réel en recharge pour un véhicule électrique laisse suffisamment de temps et ainsi la possibilité d'adopter une solution de partage de charge.

En effet, les véhicules électriques, notamment à usage personnel, restent à l'arrêt la majeure partie du temps et peuvent donc être rechargés pendant une durée plus longue avec une puissance réseau équivalente moindre.

Selon un sondage de 2017 de l'administration américaine des autoroutes (US *Federal Highway Administration*), environ 82,8% des véhicules électriques parcourent moins de 100km par jour en semaine contre 77,6% le weekend, avec une majorité de véhicules parcourant moins de 25km par jour aussi bien en semaine que le weekend.

De ce fait, la majorité des véhicules électriques ont un besoin journalier en énergie limité qui pourrait être satisfait avec une recharge plus longue à puissance réduite. Par exemple, 10h (la nuit) à 1 kW au lieu de moins de 2h à 7,4kW.

Par conséquent, il serait préférable d'obtenir une mutualisation dans laquelle plusieurs véhicules électriques partagent la puissance électrique disponible de manière à optimiser l'accès à cette ressource et sa rentabilité. Une telle mutualisation serait une piste prometteuse pour réduire davantage le bilan carbone des véhicules électriques.

Actuellement, les solutions de recharge des véhicules électriques utilisent des bornes appelées « wallbox », installées sur la place de stationnement et classiquement équipées d'une carte de contrôle assurant l'interface avec le véhicule électrique. La carte de contrôle peut répondre au Mode 3 de fonctionnement tel que défini dans la norme IEC 61851-1 établie par le comité sur les systèmes de recharge conductifs de véhicules électriques (*Electric vehicle conductive charging systems*). Dans ce cas, le véhicule électrique est raccordé au réseau d'alimentation à courant alternatif (AC), avec la fonction pilote de commande (signal CP).

Il est connu d'utiliser ces bornes avec plusieurs voies de charges, chaque voie disposant de sa propre carte de contrôle. Il est aussi connu d'équiper ces bornes avec des cartes de contrôle multivoie comme décrit dans le document WO2017/096208.

Dans de telles solutions, la déconnexion d'un véhicule électrique de sa voie de charge peut entraîner une réinitialisation du système de gestion de charge embarqué pouvant durer plusieurs dizaines de secondes, réduisant ainsi l'efficacité de la recharge, voire même produire des blocages (erreurs système).

De plus, une carte de contrôle multivoie présente un nombre fixe de voies et ne permet donc aucune modularité pour recevoir des voies de charge supplémentaires. La demande de brevet européen EP3944982A1, au nom du demandeur, concerne un système de recharge multipoint mutualisé de véhicules électriques, comprenant une borne de recharge alimentée par une source AC, et comprenant un module de contrôle de charge Mode 3 relié à un module de commutation de charge par une voie de contrôle commune (CP). Le module de commutation de charge comporte une pluralité de voies de charge, dont chacune est destinée à recharger une batterie d'un véhicule électrique, et une pluralité de commutateurs ainsi qu'une même pluralité de circuits d'émulation de pause de charge, chacun associé à une voie de contrôle de charge. Les commutateurs sont contrôlés par un module d'ordonnancement. Chaque voie de contrôle de charge est connectée soit à la voie de contrôle commune soit au circuit d'émulation de pause de charge qui lui est associé, une seule voie de contrôle de charge pouvant être connectée à la voie de contrôle commune pendant un intervalle de charge.

Pour des utilisateurs disposant d'une installation classique, cette solution nécessite le remplacement de ladite installation par une borne équipée des modules de contrôle et de commutation spécifiques précités. Cela peut donc engendrer des coûts de remplacement conséquents.

Il existe d'autres solutions pour recharger une pluralité de véhicules électriques à partir d'une seule borne de recharge.

Le document WO2005008808A2 décrit un système de charge permettant de charger simultanément les batteries d'une pluralité de véhicules fonctionnant sur batterie. La charge comprend un ou plusieurs convertisseurs CC/CC ayant une ou plusieurs connexions de charge configurées pour être branchées sur les batteries. Les convertisseurs DC/DC sont chacun configurés pour être connectés sélectivement à plus d'une connexion de charge afin de fournir sélectivement des niveaux de charge connectés plus élevés. Les convertisseurs CC/CC sont connectés à un redresseur CA via un bus CC. Le redresseur CA est connecté à une source CA avec une puissance nominale limitée. Le système de charge à courant alternatif possède également un contrôleur qui commande le fonctionnement des convertisseurs CC/CC de telle sorte que la consommation totale d'énergie du redresseur CA ne dépasse pas la puissance nominale. Le système est en outre configuré de telle sorte que les convertisseurs de puissance DC/DC peuvent décharger des batteries sélectionnées afin de fournir de l'énergie pour charger d'autres batteries, permettant ainsi la commutation des batteries.

Le document US2021036536A1 décrit quant à lui un boîtier mural CC bidirectionnel avec isolation électrique, comprenant un élément isolant configuré pour connecter et déconnecter de manière réversible le boîtier mural CC à un réseau de tension alternative ; un redresseur ayant un filtre de correction de facteur de puissance configuré pour redresser une tension alternative triphasée ; et un convertisseur DC/DC à isolation galvanique comprenant un onduleur ; un système de bus CA ayant un côté primaire et un côté secondaire électriquement isolés de celui-ci ; au moins un redresseur actif configuré pour convertir une tension alternative en une tension continue d'un niveau de tension prédéterminé ; et au moins une sortie de charge pour raccordement à une prise de charge d'un véhicule électrique ; dans lequel la sortie de l'onduleur est connectée au côté primaire du système de bus CA, et l'entrée de chaque redresseur actif est connectée au côté secondaire du système de bus CA, et chaque sortie de charge est connectée au la sortie d'un redresseur actif.

Enfin, le document EP3025901A1 décrit un adaptateur supplémentaire permettant à un seul port de recharge d'une station de recharge de véhicule électrique de recharger simultanément deux véhicules électriques. Un organe de commande d'adaptateur détermine le taux de recharge disponible offert par la station de recharge et est couplé à deux connecteurs de pilote de commande, dans deux poignées de recharge de véhicules électriques destinées à être connectées aux véhicules électriques. Un circuit de contrôle de partage de recharge dans l'organe de commande d'adaptateur détermine les taux de recharge disponibles modifiés à offrir pour recharger simultanément les véhicules électriques. Les taux de recharge disponibles modifiés sont basés sur les états de connexion des véhicules électriques et le taux de recharge disponible offert par la station de recharge. L'organe de commande d'adaptateur commande deux contacteurs pour connecter de manière commutable une prise d'alimentation de la station de recharge aux poignées de recharge des véhicules électriques, afin de fournir aux véhicules électriques une alimentation partagée au taux de recharge disponible modifié déterminé, pour une recharge simultanée.

Cette solution ne concerne donc pas une borne de recharge de type murale, et ne permet pas à l'adaptateur d'être raccordable à une borne de recharge quelconque au moyen d'un câble de recharge. De plus, dans cette solution, l'organe de commande d'adaptateur ne gère pas de manière mutualisée la recharge aux différents points de charge. En effet, il apparait que les lignes de courant L1 et L2 du signal d'alimentation ne passent pas par cet organe.

Aucune solution, à la connaissance du demandeur, ne permet d'obtenir une multiplication des points de charge et un partage de charge à partir d'une borne de recharge existante de conception conventionnelle, tout en simulant la connexion d'un véhicule électrique au niveau de ladite borne pour que l'alimentation électrique soit immédiatement disponible.

### PRÉSENTATION DE L'INVENTION

La présente invention vise à pallier les inconvénients de l'art antérieur exposés ciavant et propose une solution innovante avec une architecture de raccordement et d'alimentation électrique avec un pilotage adapté pour assurer la recharge de plusieurs véhicules à partir d'une borne existante en courant alternatif (AC) que ce soit en monophasé ou en triphasé.

Cela permet donc aux utilisateurs d'utiliser les bornes de recharge déjà installées, et ce quel que soit le fabricant, et d'éviter les coûts d'une installation supplémentaire pour obtenir un système de recharge partagée entre plusieurs véhicules électriques. À cet effet, la présente invention a pour objet un dispositif de multiplication de points de charge destiné à être raccordé à une borne de recharge pour véhicules électriques, notamment une borne murale, ledit dispositif comprenant une pluralité de points de charge pour recharger les véhicules électriques qui y sont branchés à partir de ladite borne, un module de commande pour gérer de manière mutualisée la recharge aux différents points de charge, et un module de puissance alimentant séquentiellement ou simultanément lesdits points de charge. Ce dispositif est remarquable en ce qu'il est raccordable à une quelconque borne de recharge existante au moyen d'un câble de recharge se terminant par une prise, en ce qu'il est alimenté électriquement par la borne de recharge à laquelle il est raccordé, et en ce que le module de commande comprend un circuit de simulation de véhicule électrique au niveau de la borne de recharge pour maintenir une disponibilité immédiate de l'alimentation électrique.

Selon un aspect de l'invention, le module de commande est relié au module de puissance par une liaison bidirectionnelle de contrôle portant un signal pilote (CP). Selon un aspect de l'invention, le module de commande comprend une carte de contrôle selon le Mode 3 de la norme IEC 61851-1.

Selon un mode de réalisation, le dispositif de multiplication de points de charge présente une forme de boîtier fixe ou mobile avec une prise à chaque point de charge.

La présente invention a également pour objet un système de recharge partagée pour véhicules électriques, comprenant un dispositif de multiplication de points de charge tel que présenté et une borne de recharge à laquelle est relié ledit dispositif au moyen d'un câble de recharge.

Selon un premier mode de réalisation, la borne de recharge est alimentée en courant alternatif monophasé ou triphasé, et le dispositif de multiplication de points de charge est configuré pour recharger séquentiellement une pluralité de véhicules électriques.

Selon un deuxième mode de réalisation, la borne de recharge est alimentée en courant alternatif triphasé ou monophasé, permettant de recharger simultanément trois véhicules électriques par une distribution des lignes de courant (L1, L2, L3). Les concepts fondamentaux de l'invention venant d'être exposés ci-dessus dans leur forme la plus élémentaire, d'autres détails et caractéristiques ressortiront plus clairement à la lecture de la description qui suit et en regard des dessins annexés, donnant à titre d'exemple non limitatif un mode de réalisation d'un dispositif de multiplication de points de charge et d'un système de recharge mutualisée pour véhicules électriques, conformes aux principes de l'invention.

### BRÈVE DESCRIPTION DES FIGURES

Les figures sont données à titre purement illustratif pour une meilleure compréhension de l'invention sans en limiter la portée. Les différents éléments sont représentés de manière schématique. Sur l'ensemble des figures, les éléments identiques ou équivalents portent la même référence numérique.

Il est ainsi illustré en :
- Figure 1 : un système de recharge comprenant un dispositif de multiplication de points de charge selon un premier mode de réalisation de l'invention, dans lequel l'alimentation est monophasée ou triphasée ;
- Figure 2 : l'architecture du dispositif de multiplication de points de charge selon le premier mode de réalisation ;
- Figure 3 : un schéma électrique du fonctionnement du module de commande du dispositif de multiplication de points de charge selon le premier mode de réalisation ;
- Figure 4 : un système de recharge comprenant un dispositif de multiplication de points de charge selon un deuxième mode de réalisation de l'invention, dans lequel l'alimentation est triphasée ou monophasée ;
- Figure 5 : l'architecture du dispositif de multiplication de points de charge selon le deuxième mode de réalisation ;
- Figure 6 : un schéma électrique du fonctionnement du module de commande du dispositif de multiplication de points de charge selon le deuxième mode de réalisation ;

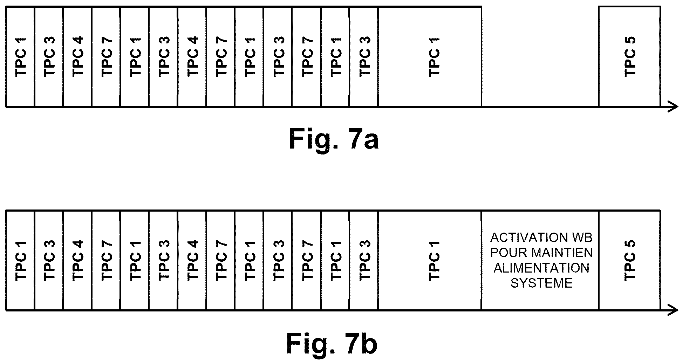

- Figure 7a : une séquence de fonctionnement d'un système de recharge partagée de l'art antérieur ;
- Figure 7b : une séquence de fonctionnement du système de recharge partagée selon le premier mode de réalisation de l'invention.

### DESCRIPTION DÉTAILLÉE DE MODES DE RÉALISATION

Dans le mode de réalisation décrit ci-après, on fait référence à un dispositif de répartition de charge qui se raccorde à toute borne de recharge existante pour véhicules électriques, destiné principalement aux bornes de recharge opérant en Mode 3 tel que défini dans la norme IEC 61851-1. Cet exemple, non limitatif, est donné pour une meilleure compréhension de l'invention et n'exclut pas l'utilisation du dispositif de multiplication de points de charge sur d'autres types de bornes de recharge.

Dans la description, le terme « charge » désigne une énergie électrique accumulée dans un système de stockage tel qu'une batterie, et le terme « recharge » désigne l'action de mettre une nouvelle charge notamment dans une batterie de véhicule électrique selon le contexte de l'invention.

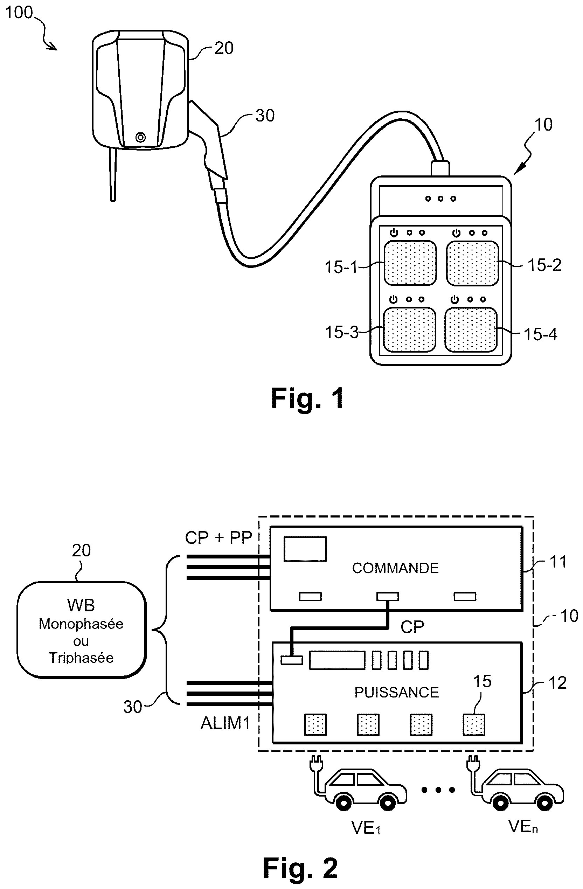

La figure 1 représente un dispositif de multiplication de points de charge 10, sous forme d'une multiprise, relié à une borne de recharge 20 existante par un câble de recharge 30 se terminant par une prise, l'ensemble formant un système de recharge partagée 100 permettant de recharger plusieurs véhicules électriques à la fois, de façon séquentielle.

La borne de recharge 20 correspond notamment à une borne murale classique, du type « wallbox » (abrégée en WB), généralement installée à une place de stationnement de véhicules électriques et reliée à une source externe d'alimentation électrique telle qu'un réseau de distribution d'électricité.

Le dispositif de multiplication de points de charge 10 assure ainsi une recharge partagée entre plusieurs véhicules électriques à partir d'une infrastructure de recharge déjà installée sans la modifier.

À cet effet, le dispositif de multiplication de points de charge 10 comporte une pluralité de points de charge 15, quatre selon le mode de réalisation de la figure 1 numérotés 15-1 à 15-4, dont chacun peut être associé à une voie de charge matérialisée par un câble de recharge branché sur un véhicule électrique.

Le dispositif de multiplication de points de charge 10 présente une conception simple et peut être fixe ou mobile. Il peut par exemple être fixé à proximité d'une borne de recharge d'un parking collectif pour permettre à plusieurs utilisateurs de recharger leurs véhicules électriques en même temps sur la même borne.

De plus, le dispositif de multiplication de points de charge 10 reste autonome en énergie car utilise l'alimentation du point de charge hôte sur la borne de recharge 20.

Selon ce premier mode de réalisation, la borne de recharge 20 est branchée sur une alimentation AC monophasée ou triphasée.

La figure 2 représente l'architecture du dispositif de multiplication de points de charge 10 ainsi que son raccordement et son alimentation, selon le premier mode de réalisation.

Le dispositif de multiplication de points de charge 10 comprend un module de commande (ou de contrôle) 11, pour gérer de manière mutualisée la charge des différentes voies de charge associées aux points de charge 15, et un module de puissance (ou de commutation) 12 relié au module de commande par une liaison bidirectionnelle de contrôle portant un signal pilote CP (*Control Pilot*).

Le module de commande 11 correspond typiquement à une carte de contrôle Mode 3, connue dans l'art.

Le module de puissance 12 alimente tour à tour les différents points de charge 15, selon un ordonnancement déterminé qui dépend du nombre n de véhicules électriques VE1 à VEn connectés et de différentes informations remontées par ces véhicules. En particulier, le module de puissance 12 commute l'alimentation AC monophasée ou triphasée ALIM1 vers les différents points de charge 15 au moyen de relais de puissance.

Ainsi, le module de puissance 12 permet de n'utiliser qu'une seule carte de contrôle 11 monovoie pour contrôler la charge d'une pluralité de véhicules VE, ladite charge étant réalisée de manière séquentielle.

Chaque point de charge 15 peut être associé à une voie de charge, matérialisée par un câble à prise électrique Mode 3 que peut brancher un utilisateur.

La borne de recharge 20 est ainsi utilisée à la fois comme source d'alimentation et comme système de gestion de charge en Mode 3 du dispositif de multiplication de points de charge 10. Lorsqu'aucun véhicule électrique n'est connecté au dispositif 10, celui-ci déclenche la borne électrique 20 en simulant la présence d'un véhicule électrique pour assurer le maintien de son alimentation électrique.

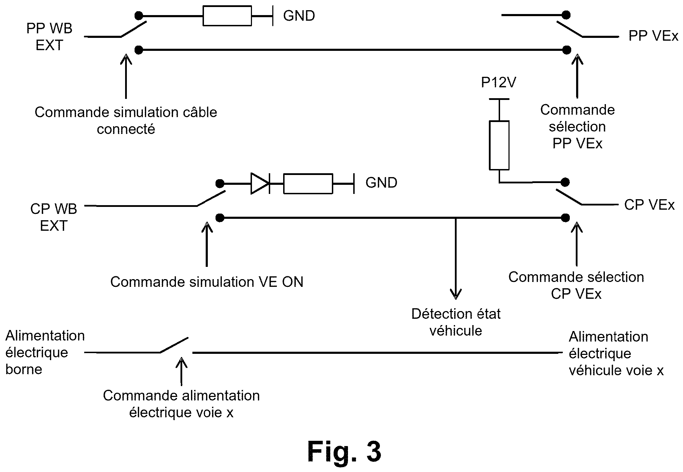

La figure 3 représente schématiquement le fonctionnement du dispositif de multiplication de points de charge 10 selon le mode de réalisation de la figure 2.

Le dispositif de multiplication de points de charge permet un aiguillage sur les n points de charge (indice x sur la figure) et une recharge séquentielle de n véhicules électriques en utilisant la borne de recharge existante aussi bien pour l'alimentation électrique de puissance que pour la gestion de la charge des véhicules.

L'état de début de charge, est contrôlé par le module de commande et commence uniquement lorsqu'un véhicule électrique VE est détecté sur une voie de charge. Le début de charge se déroule comme suit :
- Le signal PP WB EXT, relié par défaut à la résistance de simulation de câble connecté, est aiguillé vers le PP (*Proximity Pilot*) de la prise correspondante PP VEx ;
- Le signal CP de la borne de recharge CP WB EXT, relié par défaut au couple diode-résistance simulant la présence d'un VE, est commuté vers le CP de la prise correspondante CP VEx ;
- Le relais d'alimentation électrique de charge de la voie correspondante est activé (redondances pour les commandes des relais) ;
- Le véhicule VE peut alors piloter la charge (ON/OFF).

L'état de fin de charge est également contrôlé par le module de commande suivant les étapes suivantes :
- Simulation de la présence d'un VE à la borne (le signal CP WB EXT bascule sur le couple diode-résistance) et simulation de la demande de pause au VE (CP VEx bascule sur la résistance) ;
- Pendant trois secondes (respect de la norme), détection de l'état du signal CP VEx pour une ouverture des relais d'alimentation ;
- Arrêt forcé de la charge et pause du VE (coupure de l'alimentation électrique et maintien du signal CP VEx sur la résistance) ;
- Déconnexion de la borne (déconnexion des signaux PP WB EXT et CP WB EXT) pour initialisation de la borne.

L'état dans lequel aucune voie n'est sélectionnée est géré par le module de commande suivant les stratégies et la présence des véhicules selon les étapes suivantes :
- Simulation de la présence d'une prise à la borne (PP WB EXT sur la résistance) ;
- Simulation de la présence d'un VE à la borne (CP WB EXT sur le couple diode-résistance).

Le dispositif de multiplication de points de charge 10 permet de simuler la présence d'un véhicule électrique au plus près de la borne de recharge 20 pour maintenir l'alimentation disponible immédiatement en cas de besoin.

Ainsi les échanges entre la borne de recharge 20 et le module de commande 11 du dispositif 10 respectent les conditions de fonctionnement suivantes :
- Lorsqu'aucun véhicule électrique VE n'est connecté ou que les charges sont terminées (aucun courant n'est fourni par la borne), le module de commande 11 bascule en mode simulateur de VE en charge pour activer à nouveau la source d'énergie de la borne, afin de maintenir sa propre alimentation électrique.
- Lorsqu'un nouveau véhicule électrique VE est connecté, le module de commande 11 déconnecte la borne du simulateur de VE, puis connecte ledit véhicule à la borne.
- Entre chaque basculement de charge, qui correspond à un cycle entre la recharge de deux véhicules, le module de commande 11 simule un VE en charge au niveau de la borne pour maintenir l'alimentation électrique de charge en cours et, en même temps, simule au VE une demande d'arrêt de charge pendant 3 secondes, pour respecter la norme IEC61851-1 qui exige que « le VE, à la demande de la borne, doit couper son alimentation électrique au bout de 3 secondes maximum ». Cela permet notamment d'éviter de couper l'alimentation électrique de charge de façon intempestive, ce qui pourrait conduire à des erreurs du côté du VE, voire à des refus de charge.
- Dans cet intervalle de 3 secondes, l'état du circuit pilote du VE est lu par le module de commande 11 pour couper l'alimentation électrique à la demande du VE.
- À l'issue de ces 3 secondes, le VE en cours est déconnecté pour passer au suivant, le circuit de simulation de VE en charge est déconnecté de la borne pour relier la borne au nouveau véhicule.

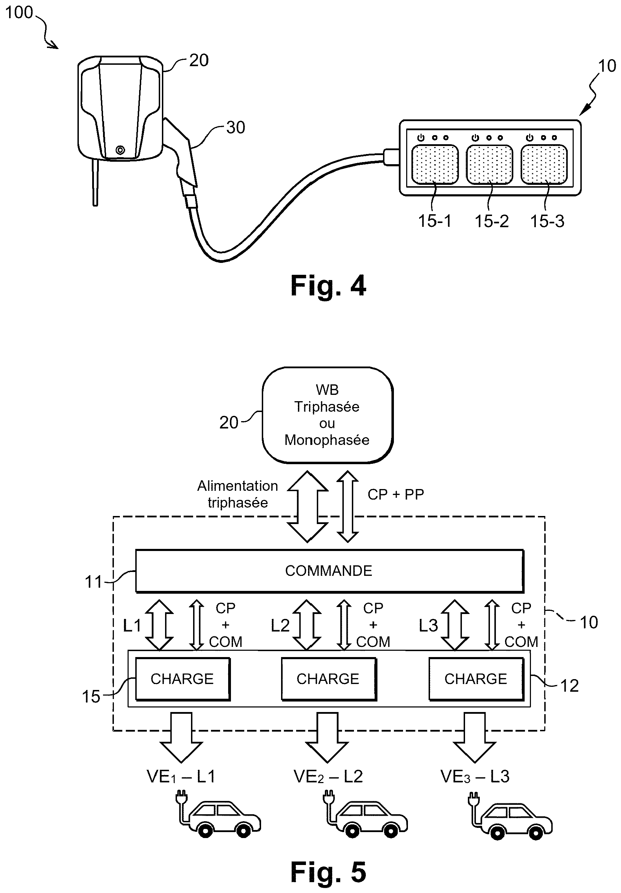

La figure 4 représente le dispositif de multiplication de points de charge 10 selon un deuxième mode de réalisation adapté à une borne de recharge 20 existante à alimentation AC triphasée ou monophasée, ledit dispositif comprenant jusqu'à trois points de charges 15, numérotés 15-1 à 15-3, dont chacun peut être associé à une voie de charge.

La figure 5 représente l'architecture du dispositif de multiplication de points de charge 10 selon ce deuxième mode de réalisation pour trois voies de charge.

Le dispositif de multiplication de points de charge 10 fournit ici trois points de charge 15 monophasés à partir d'un point de charge unique triphasé ou monophasé sur la borne de recharge 20 déjà installé, lesdits points de charge monophasés pouvant être utilisés simultanément.

En effet, les bornes de recharge à alimentation triphasée fournissent par exemple une puissance de 22kW, qui est surdimensionnée par rapport à une recharge de nuit et qui peut être partagée sur trois points de charge utilisables simultanément mais en monophasé. Cette constatation peut aussi être effectuée en monophasé 7kW pour ce mode de réalisation.

En référence à la figure 5, le module de commande 11 distribue le signal d'alimentation triphasé (L1 à L3) sur les trois points de charge 15 auxquels peuvent être branchés trois véhicules électriques VE1 à VE3.

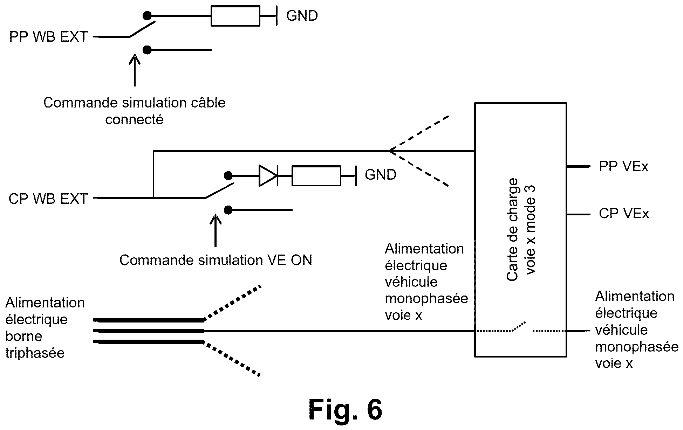

La figure 6 représente schématiquement le fonctionnement du dispositif de multiplication de points de charge 10 selon le mode de réalisation de la figure 5. Par défaut, le système simule la présence d'un VE au moyen de la résistance sur PP WB EXT et du couple diode-résistance sur CP WB EXT.

Le module de commande détecte l'autorisation de charge provenant de la borne sur le signal CP WB EXT et commande ainsi l'alimentation électrique ON/OFF et l'état de S2 dans le respect des trois secondes exigées par la norme (simulation du VE en charge). Cela évite de commuter la borne en mode simplifié conduisant à limiter le courant de charge.

L'information de courant maximum autorisé en charge sur le signal CP WB EXT est analysée par la carte de commande et transmise aux modules de charge de chaque voie.

Certains modèles de bornes triphasées contrôlent le courant sur chaque phase. Ainsi, une charge monophasée sur une borne triphasée doit consommer sur la phase 1. La consommation sur les phases 2 et 3 ne peut se faire sans que la phase 1 consomme.

Il peut donc être imaginé un système de gestion et d'aiguillage permettant de connecter les voies sur les phases 1 à 3 en fonction des configurations afin de respecter les règles ci-dessous.

Le système de recharge selon l'invention peut également fonctionner en monophasé en divisant la puissance de la phase unique, par exemple par 2 ou 3. En triphasé, le système peut aussi diviser ses sorties monophasées pour obtenir un plus grand nombre de voies, par exemple 3x2 ou 3x3.

La présente invention trouve une application directe dans la recharge de véhicules dans un domicile.

En effet, jusqu'à présent, la recharge des véhicules électriques est favorisée au domicile. En maison individuelle, elle est très facile. Il suffit notamment d'installer une borne (wallbox). La majorité des maisons sont raccordées en monophasé, impliquant que la recharge reste également monophasée, de plus en plus en 7,4 kW (32 A).

Après avoir installé une première borne pour un premier véhicule, posséder deux véhicules ou plus devient problématique en raison de la disponibilité de la puissance au regard de l'abonnement électrique et des coûts complémentaires d'installations. En France par exemple, l'abonnement maximal en monophasé est de 12 kVA (soit 60A). En considérant que 50% de la puissance du réseau électrique peut être consacrée à la recharge et l'utilisation de la première borne, il n'est plus possible d'installer une seconde borne pour les autres véhicules. D'ailleurs, il n'est même plus envisageable de consacrer au-delà de ces 32A car il y a un risque certain de rentrer en concurrence avec les autres consommateurs du foyer.

Ainsi, dans le cas d'une recharge de plusieurs véhicules avec une seule borne, la gestion de celle-ci devient compliquée et contraignante quotidiennement.

Toutefois, il est possible de partir de la borne installée initialement et de faire appel à la présente invention via une recharge séquentielle où plusieurs véhicules sont raccordés mais un seul se recharge à la fois (premier mode de réalisation), ou faire appel à une recharge simultanée où tous les véhicules branchés se partagent les 32A (deuxième mode de réalisation).

## Revendications

1. Dispositif de multiplication de points de charge (10) destiné à être raccordé à une borne de recharge (20) pour véhicules électriques, notamment une borne murale, ledit dispositif comprenant une pluralité de points de charge (15) pour recharger les véhicules électriques (VE) qui y sont branchés à partir de ladite borne, un module de commande (11) pour gérer de manière mutualisée la recharge aux différents points de charge, et un module de puissance (12) alimentant séquentiellement ou simultanément lesdits points de charge, **caractérisé en ce qu'**il est raccordable à une quelconque borne de recharge (20) existante au moyen d'un câble de recharge (30) se terminant par une prise, **en ce qu'**il est alimenté électriquement par la borne de recharge (20) à laquelle il est raccordé, et **en ce que** le module de commande (11) comprend un circuit de simulation de véhicule électrique au niveau de la borne de recharge pour maintenir une disponibilité immédiate de l'alimentation électrique.

2. Dispositif selon la revendication 1, dans lequel le module de commande (11) est relié au module de puissance (12) par une liaison bidirectionnelle de contrôle portant un signal pilote (CP).

3. Dispositif selon la revendication 1 ou 2, dans lequel le module de commande (11) comprend une carte de contrôle selon le Mode 3 de la norme IEC 61851-1.

4. Dispositif selon l'une quelconque des revendications précédentes, présentant une forme de boîtier fixe ou mobile avec une prise à chaque point de charge (15).

5. Système de recharge partagée (100) pour véhicules électriques (VE), **caractérisé en ce qu'**il comprend un dispositif de multiplication de points de charge (10) selon l'une quelconque des revendications précédentes et une borne de recharge (20) à laquelle est relié ledit dispositif au moyen d'un câble de recharge (30).

6. Système de recharge partagée selon la revendication 5, dans lequel la borne de recharge (20) est alimentée en courant alternatif monophasé ou triphasé, et dans lequel le dispositif de multiplication de points de charge (10) est configuré pour recharger séquentiellement une pluralité de véhicules électriques.

7. Système de recharge partagée selon la revendication 5, dans lequel la borne de recharge (20) est alimentée en courant alternatif triphasé ou monophasé, permettant de recharger simultanément trois véhicules électriques par une distribution des lignes de courant (L1, L2, L3).
